# EUROPEAN PATENT SPECIFICATION

(11) **EP 1 287 077 B1**
(45) Date of publication and mention of the grant of the patent: **11.02.2004**
(21) Application number: 01938922.0
(22) Date of filing: 07.06.2001
(51) Int. Cl.: C09B 23/02, C07D 401/06

(54) **SOLID PHASE SYNTHESIS OF CYANINE DYES**
SYNTHESE VON CYANINFARBSTOFFEN AN FESTER PHASE
SYNTHESE SUR PHASE SOLIDE DE COLORANTS DE TYPE CYANINE

(30) Priority: 07.06.2000 SE 0002166
(43) Date of publication of application: 05.03.2003
(73) Proprietor: Lightup Technologies AB, S-14144 Huddinge (SE)
(72) Inventor: WESTMAN, Gunnar, S-438 92 Härryda (SE); ISACSSON, Jennie, S-414 81 Göteborg (SE)
(74) Representative: Inger, Lars Ulf Bosson
(86) International application number: PCT/SE2001/001286
(87) International publication number: WO 2001/094473

(56) References cited:
- WO-A1-01/02558
- WO-A1-97/45539
- WO-A1-98/56770
- US-A- 5 863 753
- NICKE SVANVIK ET AL.: 'Light-up probes: Thiazole orange-conjugated peptide nucleic acid for detection of target nucleic acid in homogeneous solution' ANALYTICAL BIOCHEMISTRY vol. 281, 2000, pages 26 - 35, XP002948842
- OLIVER SEITZ ET AL.: 'A convergent strategy for the modification of peptide nucleic acids: Novel mismatch-specific PNA-hybridization probes' ANGEW. CHEM. INT. ED. vol. 38, no. 15, 1999, pages 2203 - 2206, XP002948843

## Description

The present invention relates to a new synthesis method for the manufacture of cyanine dyes, in particular asymmetric cyanine dyes.

Asymmetric cyanine dyes consist of two heteroaromatic fragments linked by a polymethine chain. The absorption and fluorescence characteristics of these dyes are sensitive to environmental conditions, e.g., the fluorescence quantum yield of certain cyanine dyes is drastically increased upon interaction with nucleic acids. By varying the length of the conjugated system the photo physical properties can be altered. The cyanine dyes have been used in a variety of applications, such as photosensitizers for colour photography, fluorescent probes for life sciences applications, photo-oxidants, initiators for radical polymerization reactions, energy transfer, conversion of light energy to chemical potential, flow cytometry staining. Recently, it has been presented the utilization of asymmetric cyanine dyes as reporter groups in light-up probe technology for detection of specific nucleic acid sequences (Svanvik et al, Anal. Biochem. 281, 26, 2000; Isacsson et al, Nucl. Acids Res. Methods, submitted; WO 97/45539). The synthesis of the light-up probe PNA sequence is carried out by peptide solid phase chemistry. The cyanine dye is coupled to the bases as the last step, by formation of an amide bond between the acid linker and the primary amine of the final base (Svanvik et al, Anal. Biochem. 281, 26, 2000).

The invention further belongs to the category probes for hybridization to nucleic acids, and in particular to fluorescence dyes used in such probes.

Such probes are used in methods where specific genes, gene segments, RNA molecules and other nucleic acids are identified. These methods are primarily used clinically, for example to test tissue, blood and urine samples, in food technology, agriculture and in biological research.

It is one object of the present invention to obtain fluorescent dyes which exhibit stronger fluorescent reactions than hitherto known ones.

A further object is to obtain fluorescent dyes that differ between DNA and PNA when attached to a probe.

The development of genetically modified products and the characterization of genes in human and other mammalian diseases require reliable detection of small amounts of DNA. By having a probe consisting of PNA and a cyanine dye it is possible to detect the presence of and/or quantify a specific DNA sequence by measuring the fluorescence increase from the dye. In order to obtain more sensitive probes the binding affinity of the dyes to PNA, which results in a background fluorescence, has to be reduced.

Within hospital care as well as within food industry systems are developed for an automatic analysis of the control of bacterial and virus concentrations. Using this new technology it is hoped that it is able to provide an analysis answer on the same day as tested, i.e. more or less in real time.

Probes for hybridization to nucleic acids (NA), with which it is referred to both deoxyribonucleic acids (DNA) and ribonucleic acids (RNA), are used to demonstrate the presence of specific target sequences (TS) in complex mixtures. Traditional hybridization methods, as first described by Gillespie and Spiegelman (J. Mol. Biol. 12, 829, 1956), employ a probe based on an oligodeoxyribonucleotide equipped with a reporter group (RG) that usually is a radioisotope, and encompasses usually the following steps: the nucleic acid to be tested is immobilized on a paper, glass bead or plastic surface; an excess of probe complementary to the target sequence is added; the probe is allowed to hybridize; non-hybridized probe is removed; remaining probe bound to the immobilized target sequence is detected.

WO 98/56770 discloses synthesis of a bimolecular reaction wherein one of the structural elements is bound to a solid phase using an ester bound or an amide bound. One object is hereby to achieve less problems with by-products formed, as well as a possibility of achieving a library for mass screening.

The object of the present invention is to synthetise cyanine dyes, preferably asymmetric cyanine dyes, using solid phase chemistry. This approach would make production of pure cyanine dyes easier, and a combinatorial methodology would enhance the efficiency of dye development. Furthermore, the synthesis of light-up probes is facilitated, by omitting the need for pre-synthesis and purification of the linker-modified dyes.

A further object is to obtain more pure and stable benzothiazole derivatives of cyanine dyes which are difficult, if not impossible to produce in laboratory reaction vessel chemistry by condensation reactions.

The benzothiazoles are subject to internal ring closure in "wet" chemistry. Cyanine dyes substituted with a carboxyl linker on the benzothiazole nitrogen can be problematic to handle since they are sensitive to light and undergo intramolecular ring closure reactions when stored.

### Description of the present invention

It has now turned out possible to synthesise asymmetric cyanine dyes using solid phase synthesis in accordance with the present invention which encompasses a method for the manufacture of asymmetric cyanine dyes of the general formula (Ia, Ib, Ic, Id) 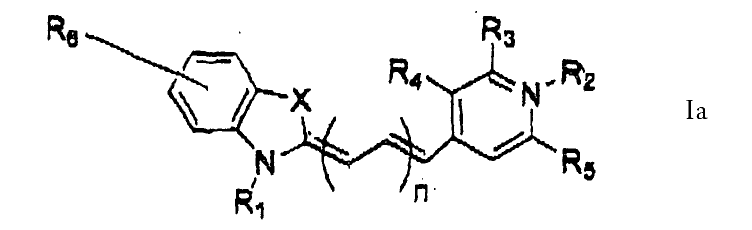 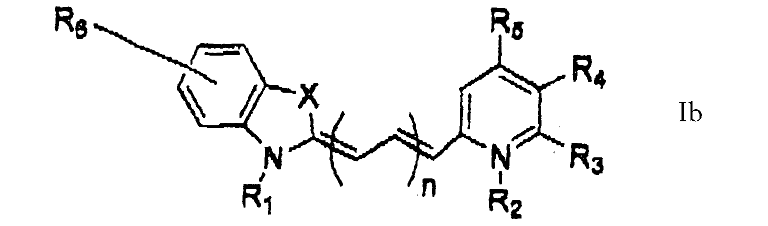 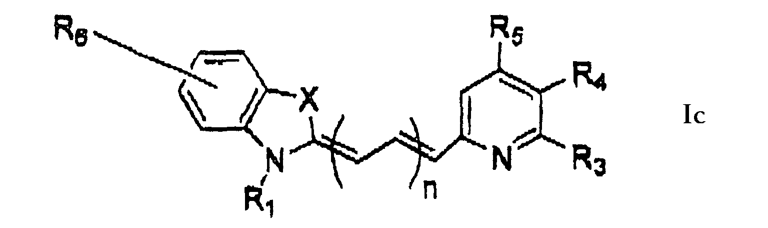 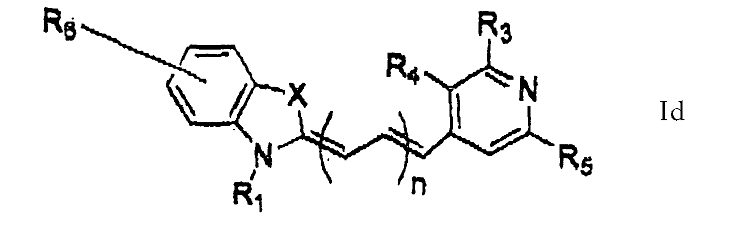 wherein X is S, O, Se, N-R₇, or C(CH₃)₂,
all R₃, R₄, R₅, R₆, R₇-groups are preferably alkyl having 1 to 7 carbon atoms,
R₁ and R₂ are alkyl groups having 1-11 carbon atoms and comprising a carbonyl group being able to attach to a solid phase resin, and whereby R₂ may be a hydrogen atom, and whereby R₃ and R₄ can denote substituents being able to create a further aromatic ring, n is 0 - 7, preferably 0,1, 2, or 3,
characterized in that a compound of the general formula (IIa, IIb) 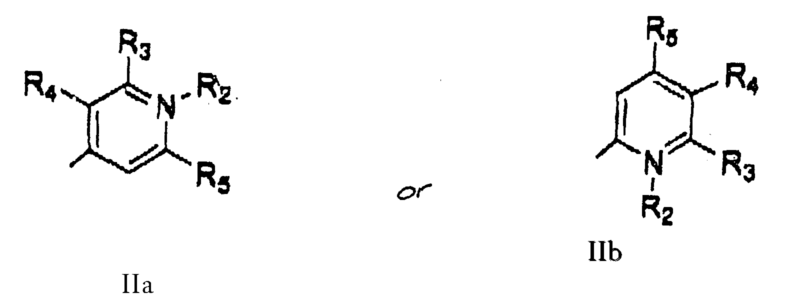 or the general formula (IIIa, IIIb) 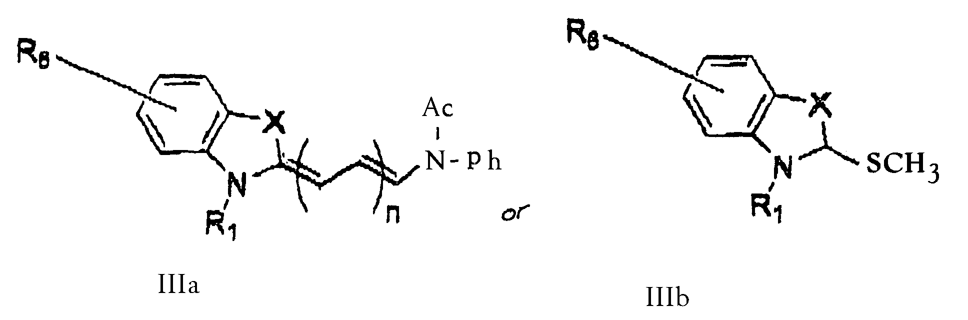 respectively,
wherein R₁, R₂, R₃, R₄, R₅, R₆, X, and n have the meanings as given above,
is attached to a solid phase molecule, and compounds of the general formula (III), and (II), respectively, is allowed to condense to the solid phase attached compound (II) or (III), respectively, to form a compound of the general formula (I)

By using solid phase synthesising reactions the reaction can be completed to very high yields, up to 100% yield and avoids the use of high temperatures, different solvents, which may be more or less toxic and influencing the environment. The present solid phase reaction is carried out at ambient temperatures and the trifluoroacetic acid used to release the final compound from the solid phase, if needed, is easily recovered.

The present invention further facilitates storage of starting materials instead of unstable, light-sensitive products with regard to probe synthetise. Thus probes can be prepared on solid phase by adding the DNA or PNA to the solid phase and then reacting the fluorescent dye directly thereon by means of the present invention.

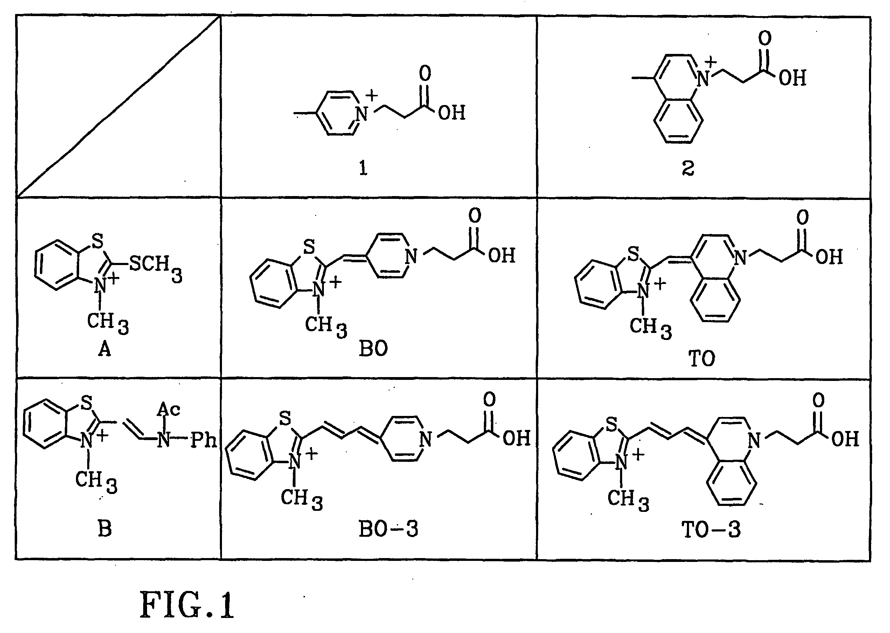

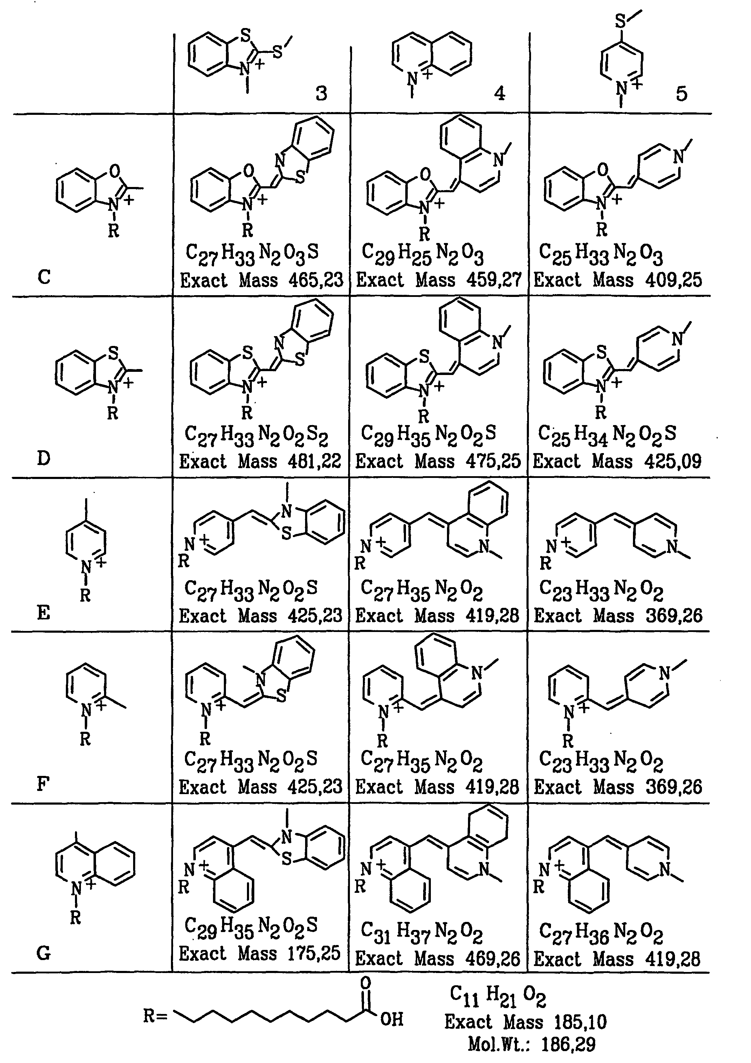

The present invention further facilitates preparation of dye libraries to construct arrays, dye spots on paper or gold surfaces. Several dyes can be prepared simultaneously and their properties can be easily screened. Properties such as addition of NAA (nucleic acid analogue)/NA (nucleic acid) to array which leads to determination of which spot that fluoresces the most, whereby a dye can distinguish between e.g., DNA and PNA; toxicity testing; drug development; and sequence specific dye binding or can only certain NA-sequences give rise to fluorescence enhancement.
A number of differently coloured cyanine dyes were synthetised to illustrate the combinatorial possibilities of solid phase dye synthesis. The starting materials were combined according to Figures 1 and 4. Compounds 1 and 2 were attached to the solid phase resin, and compounds A and B were subsequently condensed with the picoline and lepidine moieties, respectively. The visual results of the reactions were four differently coloured products, BO (yellow), TO (orange), BO-3 (purple), and TO-3 (blue). Mass spectrum analysis showed the expected product masses, but also a fraction of the starting materials attached to the resin, i.e., masses of the picoline and lepidine moieties. The condensation reactions proceeded to 48 %, 70 %, 78 %, and 50 %, respectively, for the four BO, TO, BO-3, and TO-3, respectively. The relatively high amounts of starting materials remaining are most probably due to too a short condensation reaction time.

De-protection of the Fmoc rink-amide MBHA polystyrene resin (50 mg, substitution level 0.55 mmol/g) was carried out using 25% piperidine in DMF for 30 min. The resin was split into two 25 mg portions and the acid-linker picoline and lepidine derivatives (Fig. 1, compounds 1 and 2) were coupled to the resin in 4-fold molar excess to the substitution level, using the conventional reagents HBTU and DIEA in 50% DMF/pyridine (300 µl). Reactions were allowed to proceed for 2 h at ambient temperature (about 20°C), and the resin was washed with DMF (2x2 min) after completion. Finally, the resins were split into two 10 mg portions each. The benzothiazole compounds A and B (Fig. 1) were condensed (4-fold molar excess) with the resin coupled 1 and 2 in the presence of Et₃N (5-fold molar excess) in DCM (300 µl) for 3 h at ambient temperature. The resins were finally washed with DCM (2 min) and MeOH (10 min).

In the equivalent way compounds 3-5 were coupled to compounds C-G in Fig. 4 to produce the compounds given therein.

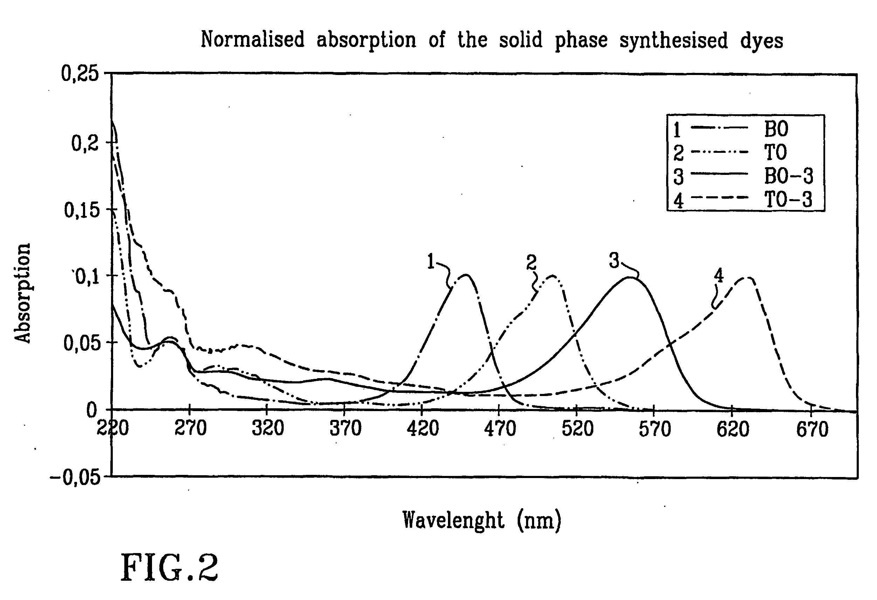

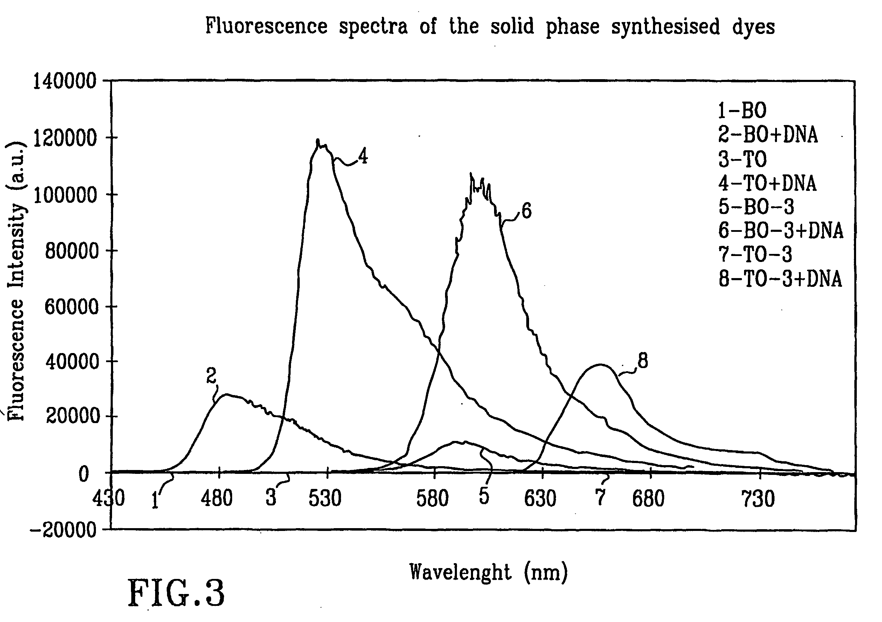

The spectroscopic properties of the four dyes of Fig. 1 were investigated. The absorption spectra of the pure dyes are shown in Figure 2. Figure 3 illustrates the fluorescence spectra for the dyes in the presence of calf thymus DNA and compared with the fluorescence of the pure dyes as such. All the four dyes synthesised exhibit similar properties when interacting with DNA: strong fluorescence enhancement associated with the restricted rotation upon intercalation (Lee et al, Cytometry, 7, 508, 1986).

Solid phase synthesis of TO-N'-10, N-methyl-4[3-(3-carboxydecyl-3H-benzothiazol-2-ylidene methyl)] quinolinium salt, the dye commonly used in light-up probes (Isacsson et al, Nucl. Acids Res. Methods, submitted) was carried out to investigate the efficiency of the condensation reaction step. Since the TO-N-10 dye has its carbon linker on the benzothiazole nitrogen, this synthesis was carried out by coupling of the linker-modified benzothiazole salt to the resin, and subsequently condensing the quinolinium salt to it. The activating base DIEA in 50 % DMF/pyridine was compared with Et₃N in DCM. After 20 hrs the latter reaction had proceeded to 100 %, while the former contained residues of the unreacted benzothiazol compound (MS), completion to 17% only. The reaction time of the condensation, using Et₃N in DCM, was subsequently investigated. Aliquots of the resin were removed at certain time points during the reaction, and were subjected to cleavage and MS analysis. The progress of te reaction can easily been shown by a plot of the product formation and disappearance of the benzothiazol reagent, respectively, versus reaction time of the experiment. DIEA and Et₃N have been given as examples of suitable amines. Other amines which can be used are alkylamines.

A light-up probe was synthetised in which the TO-N-10 dye was condensed on the PNA sequence as described above. Some light-up probes are purified by HPLC before use, probes containing only the benzothiazole moiety will be separated from the correct probes and thus, the condensation reaction time is not that critical. The light-up probe synthetised in this way has the same properties as the corresponding probe synthesized in the ordinary way where the dye is coupled to the PNA bases as the last synthesis step.

In summary it has been shown that the synthesis of different asymmetric cyanine dyes, utilizing solid phase chemistry is possible. The combinatorial approach makes it easier to develop novel dyes and the small synthesis scale is convenient for screening purposes. The ineterconnecting chain length and substitutions are readily altered, and further experiments will make it possible to vary the linker lengths, as well. In addition, this synthesis methodology facilitates synthesis of light-up probes, since the production of pure dyes, prior to probe synthesis is unnecessary. The starting material is easier to store, it is not sensitive to light or subjected to ring closure, which has been a problem with pre-synthesised dyes (Hung et al, Anal. Biochem, 243, 15, 1986).

The solid phase may consist of resins, in particular functionalised solid resins, such as functionalised polystyrenes, gold surfaces, in which case the hydroxy group of the carbonyl group is replaced by a thiol-group, paper material or silicon surfaces, such as a glass substrate. A functionalised group means a group that can link to an amine group, and preferably the link can be detached by trifluoroacetic acid. The carbonyl group may have, alternatively, its OH-group replaced by an amine group. The solid phase may further be a solid phase of above onto which a nucleic acid analogue/nucleic acid/peptide sequence is attached and onto which the cyanine dye is synthetised. The NAA/NA/peptide sequence thereby forms the solid phase base.

Abbreviations used herein:

DCM: dichloromethane; DIEA: diisopropylethylamine; DMF: N,N-dimethylformanude; Et3N: triethylamine; Fmoc: fluorenylmethoxycarbonyl; HBTU: (2-(1H-benzotriazol-1-yl)-1, 1, 3, 3-tetramethyluroniumfluorophosphate; MBHA: p-methylbenzhydrylamine; MS: mass spectrometry; PNA: peptide nucleic acid; TFA: trifluoroacetic acid.

### Example

De-protection of Fmoc rink-amide MBHA resin was carried out with 25 % piperidine in DMF for 30 min. The acid-linker derivatives (1 and 2) were coupled in 4-fold excess to the substitution level of the resin, using conventional reagents HBTU and DIEA in 50 % DMF/pyridine. Reactions were allowed to proceed for 2 hrs. Following washings with DMF, the benzothiazol compounds (A and B) were condensed with 1 or 2 at ambient temperature, in the presence of Et₃N (5-fold excess) in DCM. Products were cleaved by treatment with 95 % TFA/water for 90 min, and subsequently evaporated.

The opposite order of ingoing reactants have been tested as well, whereby compounds A and B in Fig. 1 having a R₁ group comprising a carbonyl group, attached to the N-atom were attached to the solid phase and compounds 1 and 2, then comprising a methyl group (R₂) attached to the N-atom, were reacted thereto. The yields obtained amounted to 100 % after a reaction time of less than 12 hrs in each individual reaction.

Plain glass slides were cleaned in piranha solution (70:30 v/v mixture of concentrated H₂SO₄ and 30% H₂O₂) for 12 hours at room temperature (about 20°C). After thorough rinsing with distilled water the slides were treated with a 3% solution of 3-aminopropyltriethoxysilane (United Chemical Technologies, Bristol, PA) in 95% ethanol for 1 hour. The absorbed silane layer was cured at 115°C for 1 hour. After cooling to room temperature the slides were washed several times in 95% ethanol to remove uncoupled reagent. The slides were used for solid phase reactions, whereby the dyes prepared were not removed but kept in place and the dyes prepared were used at the respective places on the slide(-s).

## Claims

1. Method for the manufacture of cyanine dyes of the general formula (la, lb, lc, ld) 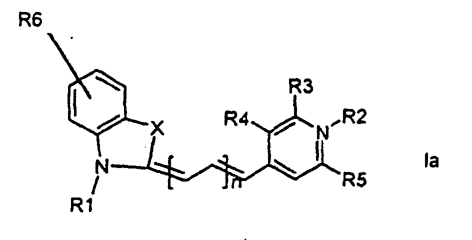 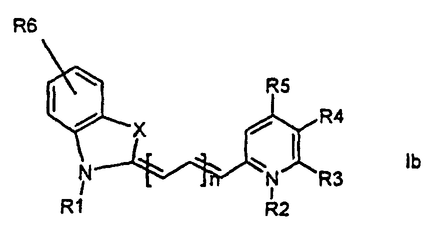 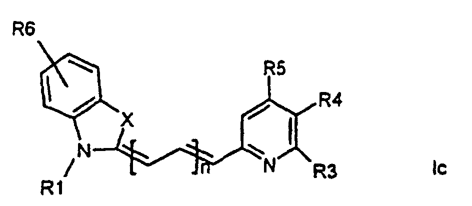 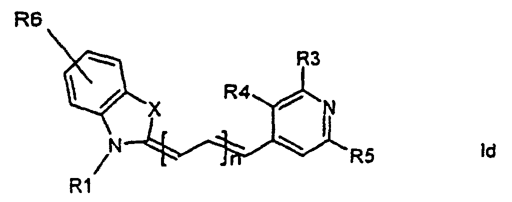 wherein X is S, O, Se, N-R₇, or C(CH₃)₂,
all R-groups are preferably alkyl having 1 to 7 carbon atoms, whereby R₁ and R₂ each individually comprises a carbonyl group being able to attach to a solid phase molecule, and whereby R₃ and R₄ can denote substituents being able to create a further aromatic ring optionally comprising a hetero atom of the group O, S, Se, n is 0 - 7, preferably 0,1, 2, or 3, or a corresponding symmetric cyanine dye comprising two benzthiazol groups or two quinoline groups. **characterized in that** a compound of the general formula (IIa, IIb) 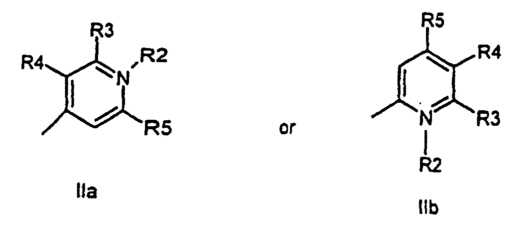 or the general formula (IIIa, IIIb) 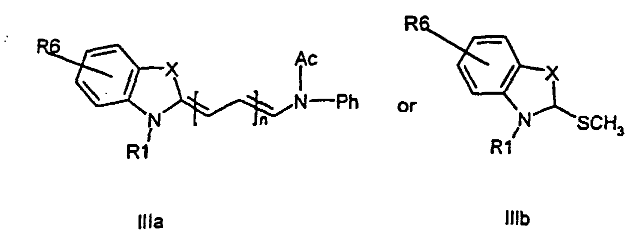 respectively,
wherein R₁, R₂, R₃, R₄, R₅, R₆, X, and n have the meanings as given above is attached to a solid phase resin, and compounds of the general formula (III, IIIb) or (IIa, IIb), respectively, is allowed to condense to the solid phase attached compound (IIa, IIb) or (IIIa, IIIb), respectively, to form a compound of the general formula (Ia, Ib, Ic, Id).

2. Method according to claim 1, wherein the solid phase consists of a resin selected from the group consisting of functionalised resins.

3. Method according to claim 1, wherein the solid phase consists of a gold surface.

4. Method according to claim 1, wherein the solid phase consists of paper.

5. Method according to claim 1, wherein the solid phase consists of silicon surface.

6. Method according to claim1, wherein the solid phase consists of a glass substrate surface.

7. Method according to one or more of claims 1-6, wherein the condensation reaction is carried out at ambient temperature.

8. Method according to one or more of claims 1-7, wherein the solid phase molecule comprises attached to a solid phase base a nucleic acid analogue/nucleic acid/peptide sequence onto which the cyanine dye is synthesised.

## Patentansprüche

1. Verfahren zur Herstellung von Cyaninfarbstoffen der allgemeinen Formel (Ia, Ib, Ic, Id) 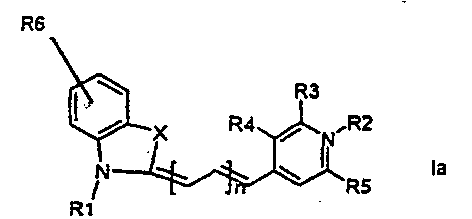 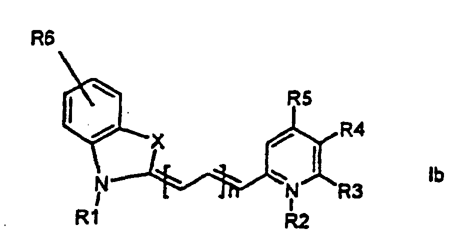 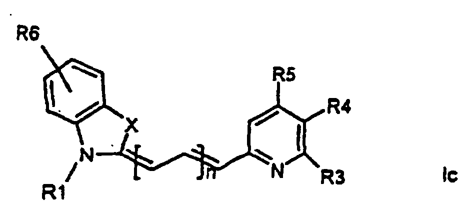 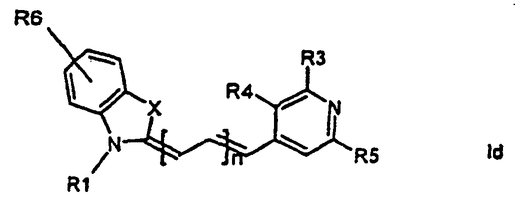 worin X S, O, Se, N-R₇ oder C(CH₃)₂ ist,
alle Gruppen R vorzugsweise eine Alkylgruppe mit 1 bis 7 Kohlenstoffatomen sind, wobei R₁ und R₂ jeweils einzeln eine Carbonylgruppe aufweisen, die sich mit einem Molekül der festen Phase verbinden kann, und wobei R₃ und R₄ Substituenten bezeichnen können, die einen weiteren aromatischen Ring erzeugen können, der gegebenenfalls ein Heteroatom aus der Gruppe O, S, Se umfaßt, n 0 bis 7, vorzugsweise 0, 1, 2 oder 3 ist,
oder eines entsprechenden symmetrischen Cyaninfarbstoffs, der zwei Benzothiazolgruppen oder zwei Chinolingruppen aufweist,
**dadurch gekennzeichnet, daß** eine Verbindung der allgemeinen Formel (IIa, IIb) 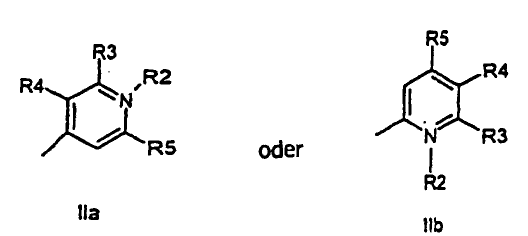 oder der allgemeinen Formel (IIIa, IIIb) 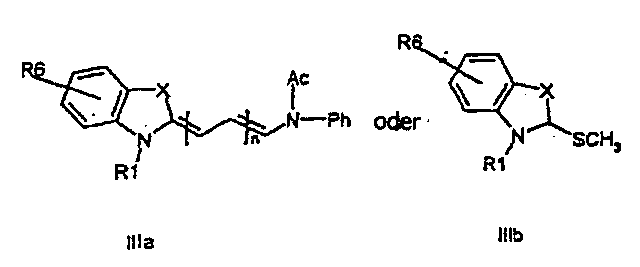 worin R₁, R₂, R₃, R₄, R₅, R₆, X und n die gleichen Bedeutungen wie vorstehend aufgeführt haben, an eine feste Phase aus einem Harz gebunden wird, und Verbindungen der allgemeinen Formel (III, IIIb) oder (IIa, IIb) mit der an die feste Phase gebundenen Verbindung (IIa, IIb) oder (IIIa, IIIb) kondensieren können, wodurch eine Verbindung der allgemeinen Formel (Ia, Ib, Ic, Id) erzeugt wird.

2. Verfahren nach Anspruch 1, wobei die feste Phase aus einem Harz besteht, das aus der Gruppe ausgewählt ist, die aus funktionalisierten Harzen besteht.

3. Verfahren nach Anspruch 1, wobei die feste Phase aus einer Goldoberfläche besteht.

4. Verfahren nach Anspruch 1, wobei die feste Phase aus Papier besteht.

5. Verfahren nach Anspruch 1, wobei die feste Phase aus einer Siliciumoberfläche besteht.

6. Verfahren nach Anspruch 1, wobei die feste Phase aus einer Oberfläche eines Glassubstrats besteht.

7. Verfahren nach einem oder mehreren der Ansprüche 1 bis 6, wobei die Kondensationsreaktion bei Umgebungstemperatur erfolgt.

8. Verfahren nach einem oder mehreren der Ansprüche 1 bis 7, wobei das Molekül der festen Phase eine an einen Träger in der festen Phase gebundene einer Nucleinsäure analoge Verbindung/Nucleinsäure/Peptidsequenz aufweist, auf die der Cyaninfarbstoff synthetisiert ist.

## Revendications

1. Procédé de fabrication de colorants à base de cyanine ayant la formule générale (Ia, Ib, Ic, Id) 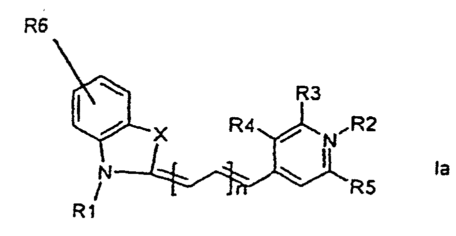 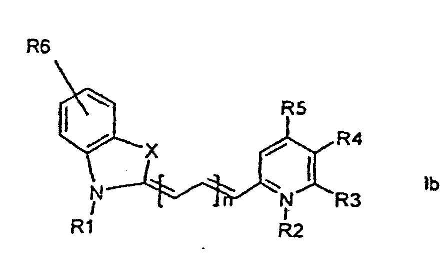 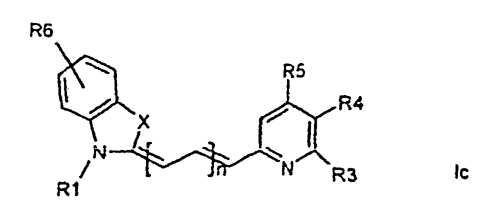 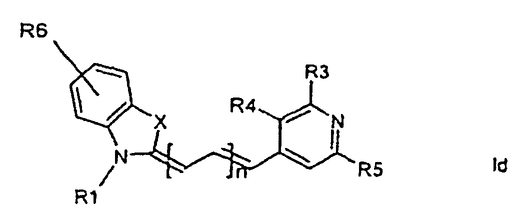 où X est S, O, Se, N-R₇, ou C(CH₃)₂,
tous les groupes R sont de préférence un alkyle ayant de 1 à 7 atomes de carbone, de sorte que R₁ et R₂ comportent chacun individuellement un group carbonyle qui est capable de se fixer à une molécule en phase solide, et de sorte que R₃ et R₄ peuvent désigner des substituants qui sont capables de créer un anneau aromatique supplémentaire comportant de manière facultative un hétéroatome parmi le groupe O, S, Se, n est compris entre 0 et 7, de préférence est égal à 0, 1, 2 ou 3, ou un colorant à base de cyanine symétrique correspondant comportant deux groupes benzothiazole ou deux groupes quinoline,
**caractérisé en ce qu**'un composé ayant la formule générale (IIa, IIb) 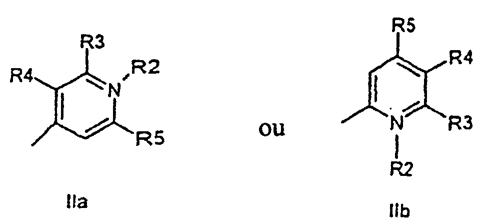 ou la formule générale (IIIa, IIIb) 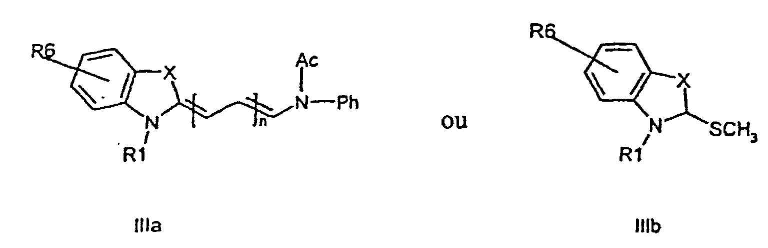 respectivement,
où R₁, R₂, R₃, R₄, R₅, R₆, X et n ont les significations comme donné ci-dessus, est fixé à une résine en phase solide, et des composés ayant la formule générale (IIIa, IIIb) ou (IIa, IIb), respectivement, sont autorisés à se condenser sur le composé fixé à la phase solide (IIa, IIb) ou (IIIa, IIIb), respectivement, pour former un composé ayant la formule générale (Ia, Ib, Ic, Id).

2. Procédé selon la revendication 1, dans lequel la phase solide est constituée d'une résine sélectionnée parmi le groupe constitué de résines rendues fonctionnelles.

3. Procédé selon la revendication 1, dans lequel la phase solide est constituée d'une surface d'or.

4. Procédé selon la revendication 1, dans lequel la phase solide est constituée d'un papier.

5. Procédé selon la revendication 1, dans lequel la phase solide est constituée d'une surface de silicium.

6. Procédé selon la revendication 1, dans lequel la phase solide est constituée d'une surface de substrat en verre.

7. Procédé selon l'une quelconque des revendications 1 à 6, dans lequel la réaction de condensation est effectuée à température ambiante.

8. Procédé selon l'une quelconque des revendications 1 à 7, dans lequel la molécule en phase solide comporte, attachée à une base en phase solide, une séquence d'analogue d'acide nucléique/acide nucléique/peptide sur laquelle le colorant à base de cyanine est synthétisé.
